(19) Europäisches Patentamt
European Patent Office
Office européen des brevets

(11) **EP 4 682 586 A1**

(12) **EUROPEAN PATENT APPLICATION**

(43) Date of publication:
**21.01.2026 Bulletin 2026/04**

(21) Application number: **24189428.6**

(22) Date of filing: **18.07.2024**

(51) International Patent Classification (IPC):
**G01S 13/32** *(2006.01)* **G01S 13/34** *(2006.01)*
**G01S 13/58** *(2006.01)* **G01S 13/931** *(2020.01)*

(52) Cooperative Patent Classification (CPC):
**G01S 13/343; G01S 13/325; G01S 13/584;
G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.
5656 AG Eindhoven (NL)**

(72) Inventors:
• **Petrov, Nikita
5656AG Eindhoven (NL)**

• **Jansen, Feike Guus
5656AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire S051 9NJ (GB)**

Remarks:
Amended claims in accordance with Rule 137(2)
EPC.

(54) **PHASE-CODED FMCW MIMO RADAR WITH CROSS-CORRELATION RESIDUE CANCELLATION**

(57)    Aspects of this disclosure are directed to systems and a method of operating a MIMO radar system for automotive applications, comprising, transmitting FMCW, signals from first and second transmitters; wherein the signals each comprise a plurality of chirps, and each signal comprises phase modulation of the FMCW signal within each chirp by a respective CDMA phase-code to produce a respective first and second PM-FMCW signal; receiving a composite signal comprising at least one reflection the first PM-FMCW signal and the second PM-FMCW signal; and processing, in the digital domain, a plurality of down-converted and pre-processed groups of samples of the composite signal by: applying a frequency-response-correction; applying a group delay filter; removing the CDMA phase-code; applying a 2D-FFT; and removing phase-code cross-correlation residue from the respective transformed demodulated groups of samples by calculating an estimated residue and subtracting the estimated residue from the respective transformed demodulated signal.

Fig. 3

EP 4 682 586 A1

**Description**

FIELD OF THE DISCLOSURE

This present disclosure relates, in general, to MIMO FMCW radar system and methods.

BACKGROUND

To date, most multiple input multiple output (MIMO) multiplexing schemes used for automotive radar have relied on time discrimination (time division multiple access - TDMA) or velocity discrimination (Doppler division multiple access - DDMA). However, these schemes are not easily scalable to large numbers of simultaneously active transmitters, in part because of a reduction in the unambiguous velocity interval.

An alternative scheme is code division multiple access (CDMA) over chirps. This does not limit an unambiguous velocity, but generally degrades the dynamic range of the system, proportionally to the number of active transmit (Tx) elements, as a result of linear processing on the receiver. In particular, the dynamic range, or orthogonality ratio (OR) which may be defined as the ratio between the peak level and an average sidelobe level and provides an indication of the ease of detection of peaks, decreases with an increasing number, K, of transmitters. In particular, for a code-length of Lc, the orthogonality ratio may be approximated by:

$$OR = 10\log10 \, ( \, (K\text{-}1)/Lc \, ) \qquad (1)$$

Using Eq. 1 it can be shown that a typical system would have average sidelobes which are 33 dB below the peak in the case of 2 transmit elements and code length 2048, but this would fall to only 21 dB for 16 transmit elements. Improving the dynamic range by means of residue cancellation has been considered for such CDMA systems but, for a fixed frame rate, the number of chirps and the duration of each chirp have to be balanced. Since increasing the code length requires increasing the number of chirps, this is constrained by the requirements to have adequate chirp length.

SUMMARY

According to a first aspect of the present disclosure, there is provided a method of operating a multi-input multi-output, MIMO, radar system for automotive applications, the method comprising, transmitting a first frequency-modulated continuous wave, FMCW, signal from a first transmitter; transmitting a second FMCW signal from a second transmitter; wherein the first signal and the second signal each comprise a plurality of chirps, and each signal comprises phase modulation of the FMCW signal within each chirp by a respective Code Division Multiple Access, CDMA, phase-code to produce a respective first and second PM-FMCW signal; receiving, at a receiver, a composite signal comprising at least one reflection of each of the first PM-FMCW signal and the second PM-FMCW signal; and processing, in the digital domain, a plurality of down-converted and pre-processed groups of samples of the composite signal, by: applying a frequency-response-correction to the down-converted and pre-processed groups of samples, to provide corrected groups of samples; applying a group delay filter to align the CDMA phase-codes of the corrected groups of samples, to provide time-aligned groups of sample; removing the respective CDMA phase-code from the time-aligned groups of samples to provide respective demodulated groups of samples; transforming the respective demodulated groups of samples to the range-doppler domain by applying a 2-dimensional fast Fourier transform, 2D-FFT; and removing phase-code cross-correlation residue from the respective transformed demodulated groups of samples by calculating an estimated residue and subtracting the estimated residue from the respective transformed demodulated signal. The residue cancellation allows for weaker targets to be unmasked, rather than hidden by the cross-correlation residues from stronger targets. In turn this may enable PM-FMCW to be used with adequate performance at an acceptable level of processing, that is to say, the processing is achievable in a sufficiently short timeframe to be useful. It will be appreciated that although only a first transmitters are recited above, there may be further transmitters, and the phase-code cross-correlation residue, may derive from more than a single cross-correlation.

In one or more embodiments, removing the respective CDMA phase-code comprises multiplying the group-corrected frequency-response-corrected group of samples with a conjugate of the PM-FMCW signal.

In one or more embodiments, the first and second signals each comprise repeating frames of a plurality of chirps, and each chirp within a frame has a different CDMA phase-code.

In other embodiments, the first and second signals each comprise repeating frames of a plurality of chirps, and each chirp within a frame has a same CDMA phase-code. In such embodiments each chirp within a frame may have a different second CDMA-code.

Thus the CDMA codes may be repeated within a frame, such that the CDMA phase code does not occupy the complete duration of the frame; for example the CDMA phase code may extend across a single chirp and a separate "outer-code" may be used to distinguish the chirps with the frame.

In one or more embodiments each chirp comprises a plurality of chips, and has a phase-code comprising a combination of a respective phase of each of the chips. Typically, there may be between four and 16 chips per chirp, or even as many as 64 or more chips per chirp.

In one or more embodiments the frequency modulation is linear modulation. Without limitation, the linear frequency modulation may provide an up chirp, or a down chirp.

In one or more embodiments removing a phase-code cross-correlation residue from each respective transformed demodulated signal comprises a residue-cancellation iteration comprising: applying a detection mask to the respective transformed demodulated signal, thereby isolating high-probability target points; applying a 2D inverse FFT, 2D-IFFT, resulting in an isolated-target signal; estimating a respective estimated cross-correlation component in or within each other transformed demodulated signal, from the transformed isolated-target signal, and combining these to produce an estimated-residue signal; applying a 2D FFT, to the estimated-residue signal, to produce a transformed estimated-residue signal; and subtracting the transformed estimated-residue from the respective transformed demodulated signal. It will be appreciated that a separate 2D FFT is applied for each Tx under this arrangement. In particular, the application of group delay part and the application of the code across fast and slow time, allows both dimensions to be used and enables a longer code with higher orthogonality ratio. This may improve the detection of weak targets and make the technique more suitable to dense traffic scenarios and higher number of transmit antennas.

In one or more embodiments, the method may further comprise a further residue-cancellation iteration. Increasing the number of residue-cancellation iterations improves the level of detection of targets; however this generally should be traded with, or balanced against, the increasing processing resource required for multiple iterations. The number of iterations for any given application may be determined by the specific details of that application, the equipment and particularly the DSP used, etc.

According to a second aspect of the present disclosure, there is provided a CDMA automotive MIMO radar system comprising: a plurality of transmitters, each configured to transmits a radar frames comprising a plurality of chirps having frequency-modulation therein, wherein the frames from each transmitter include Code Division Multiple Access, CDMA, encoding according to which each of the plurality of chirps includes phase-modulation therewithin; a plurality of receivers; a respective RF-front end processor for each of the plurality of receivers, configured to provide groups of digital samples of the down-converted, and pre-processed, to a digital signal processor; and a digital signal processor configured to apply a frequency-response-correction to the down-converted and pre-processed groups of samples, to provide corrected groups of samples; apply a group delay filter to align the CDMA phase-codes of the corrected groups of samples, to provide time-aligned groups of sample; remove the respective CDMA phase-code from the time-aligned groups of samples to provide respective demodulated groups of samples; transform the respective demodulated groups of samples to a range-doppler domain by applying a 2-dimensional fast Fourier transform, 2D-FFT; and remove phase-code cross-correlation residue from the respective transformed demodulated groups of samples by calculating an estimated residue and subtracting the estimated residue from the respective transformed demodulated signal.

In one or more embodiments, removing the respective CDMA phase-code comprises multiplying the group-corrected frequency-response-corrected group of samples with a conjugate of the PM-FMCW signal. That is to say, it is multiplied with the phase-code that was used for modulating the chirp to obtain PM-FMCW signal.

In one or more embodiments, the first and second signals each comprise repeating frames of a plurality of chirps, and each chirp within a frame has a different CDMA phase-code. In one or more embodiments, each chirp comprises a plurality of chips, and has a phase-code comprising a combination of the respective phase of each of the chips. In one or more embodiments, the frequency modulation is linear modulation.

In one or more embodiments, the processor is configured to remove a phase-code cross-correlation residue from each respective transformed demodulated signal (that is to say, each respective channel) comprises a residue-cancellation iteration by: applying a detection mask to the respective transformed demodulated signal, thereby isolating high-probability target points, and removing the remainder of the signal; applying a 2D inverse FFT, 2D-IFFT, resulting in an isolated-target signal; estimating a respective estimated cross-correlation component with each other transformed demodulated signal, from the isolated-target signal, and combining these to produce a estimated-residue signal; and applying a 2D FFT, to the estimated-residue signal., to produce a transformed estimated-residue signal; and subtracting the transformed estimated-residue from the respective transformed demodulated signal.

In one or more embodiments, the processor is configured a plurality of residue-cancellation iterations.

According to a third aspect of the present disclosure, there is provided a method of operating a multi-input multi-output, MIMO, radar system for automotive applications, the method comprising: transmitting a first frequency-modulated continuous wave, FMCW, signal from a first transmitter; transmitting a second FMCW signal from a second transmitter; wherein the first signal and the second signal each comprise a plurality of chirps, and each signal comprises phase modulation of the FMCW signal within each chirp by a respective Code Division Multiple Access, CDMA, phase-code to produce a respective first and second PM-FMCW signal; receiving, at a receiver, a composite signal comprising at least one reflection the first PM-FMCW signal and the second PM-FMCW signal; processing, in the digital domain, a plurality of down-converted and pre-processed groups of samples of the composite signal, by: applying a frequency-response-correction to the down-converted and pre-processed groups of samples, to provide corrected samples; applying a group delay filter to align the CDMA phase-codes of the corrected samples, to provide time-aligned groups of sample; removing the respective CDMA phase-code from the time-aligned groups of samples to provide respective demodulated groups of samples; transforming the respective demodulated groups of samples to a range-doppler domain by applying a 2-dimensional fast Fourier transform, 2D-FFT; and removing phase-code cross-correlation residue from the respective transformed demodulated groups of samples by calculating an estimated residue and subtracting the estimated residue from the respective transformed demodulated signal.

In one or more embodiments, removing the respective CDMA phase-code comprises multiplying the group-corrected frequency-response-corrected group of samples with a conjugate of the PM-FMCW signal, in other words, multiplying with the phase-code that was used for modulating the chirp to obtain PM-FMCW signal.

In one or more embodiments, the first and second signals each comprise repeating frames of a plurality of chirps, and each chirp within a frame has a different CDMA phase-code.

BRIEF DESCRIPTION OF THE DRAWINGS

Reference will now be made to the accompanying drawings, wherein:

FIG. 1 shows, schematically, a radar system as a high-level block diagram level, according to one or more embodiments;
FIG. 2 shows the radar system of figure 1 in more detail;
FIG. 3 shows the radar system of figure 1 in yet more detail;
FIG. 4 shows a process flow diagram according to embodiments of the present disclosure;
FIG. 5 shows a simplified block diagram of a residue cancellation method according to embodiments of the present disclosure;
FIG. 6 shows a flow diagram of the method of FIG. 5;
FIG. 7 shows a block diagram of a general residue cancellation method according to embodiments of the present disclosure;
FIG. 8 shows an example of fast time phase history before and after applying the group delay filter, compared with the transmitted signal; and
FIG. 9, this shows some statistical analysis of the achievable dynamic range according to embodiments of the present disclosuse.

It should be noted that the FIG'.s are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION

As described in the introduction, use of CDMA in frequency modulated continuous wave (FMCW) radar has generally been constrained to applying codes between the chirps (in the so-called "slow-time"), and the code length is thus constrained by the number of chirps per frame. The present disclosure is concerned with providing codes for CDMA within individual chirp (that is to say in the so-called "fast-time"), and addressing the consequential orthogonality ratio issues.

Since the available code length within an individual chirp may not be sufficient, the coding generally extends across chirps as well as within an individual chirp. Joint slow-time and fast-time coding may achieve better separability of the transmit channels. In combination with this, two-dimensional iterative residue cancellation of the codes, as will be discussed herein below in more detail, may improve the achievable dynamic range of the system, albeit that the two-dimensional residue cancellation increases the signal processing to some extent.

It should be noted that the application of the codes - which are defined by a modulation of the phase (PM) - is on top of, that is to say combined with rather than a replaced for, the frequency modulation of the FMCW signal. Signals according to the present disclosure may therefore be described as PM-FMCW signals. The present disclosure is thus not concerned with pure PMCW signals. Pure PMCW signals would require an entirely different system architecture to that of FMCW automotive radar.

The skilled person will be aware that in the context of radar systems, a chirp may be defined as a continuous wave signal or tone, having a frequency which is modulated over the time of the chirp, typically from a lower start frequency to an upper end frequency for an "up" chirp, or from an upper start frequency to a lower end frequency for a "down" chirp. At the end of the chirp, the frequency may be immediately reset to the start frequency, to provide a "saw-tooth" in frequency. A group of such chirps may be described as a frame.

Thus, according to aspects of the present disclosure, the transmitted signal combines linear frequency modulation (LFM) - which generates "chirps" - with additional phase modulation, in the fast time, that is to say, within the chirp. The code applied to an individual chirp is generally different from that applied to other chirps. Each chirp may be considered as a group of sub-elements or chips, and in the case of binary phase coding each chip has one of two relative phases. The skilled person will appreciate that the term "phase" as used herein may, depending on the context, refer to a relative phase, compared with a same-frequency signal such that the relative phase is 0° if the signals are in phase, 90° if they are in quadrature, 180°, if they are anti-phase, and so on. Although binary coding is the simplest coding conceptually, in practical applications, the sharp transitions associated with binary coding may be problematic, and alternative coding schemes, such as higher level coding, or GMSK (gaussian minimum shift keying) may be preferred, as will be familiar to the skilled person. The present disclosure is not dependent on any particular type of coding for the phase codes. Although in some embodiments, the code applied to an individual chirp is generally from that applied to other chirps within a frame, in other embodiments each chirp of a frame has the same CDMA phase-code. In such embodiments, typically a second CDMA code is applied across the chirps of a frame. The combination of the CDMA phase-code, and the second CDMA code, uniquely identifies the chirps from each transmitter across a frame.

The coding is different for each Tx element of the system; the Tx elements may be on the same integrated circuit (IC) or chip, or may be across a plurality of cascaded ICs; the codes are used to distinguish the signals from each Tx element which are received, together, on each Rx element, thereby creating virtual MIMO channels. A group delay filter in the receive processor is used to align, in time, the signals from each of the range cells. The skilled person with be familiar that the complete range i.e. the maximum distance over which the radar can detect reflections from a target is divided or split into an appropriate number of sub-ranges, or range cells. The group delay filter provides compensation for the time delay associated with multiple targets at multiple different distances from the radar. It simplifies or reduces the processing complexity in the remainder of the receive process flow, and in particular, the demodulation to remove the codes from the signal. Signal coding and decoding is generally performed in both fast-time and slow-time together, such that the CDMA codes are removed both within each chirp and across chirps in the same process stage. Thereafter, cancellation of code residues resulting from cross-correlation is applied in order to improve the dynamic range. The code residue cancellation may be a single pass through the cancellation process, or may be applied through multiple passes or iterations.

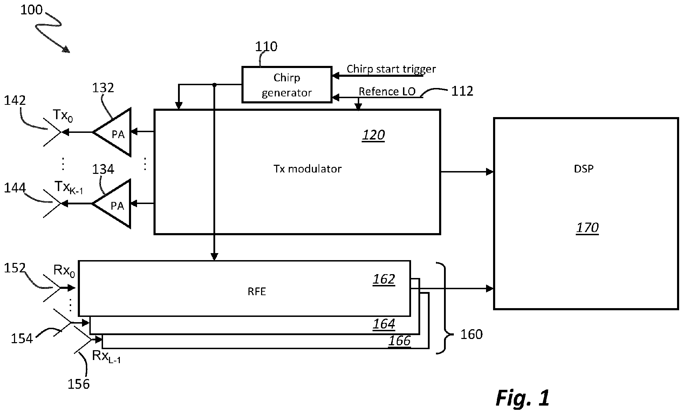

Turning now to the FIG.s, FIG. 1 shows, schematically, a radar system 100 as a high-level block diagram, according to one or more embodiments. The system comprises a chirp generator 110, which applies frequency modulation to the continuous signal, or tone, provided from a reference local oscillator (LO) 112. In Automotive applications, the tone may typically be in one of the frequency bands allocated to automotive radar, such as 76 to 81 GHz, and around 140 GHz. The chirp generator may modulate the tone, over a bandwidth of, for example, 250-750 MHz, although for some applications, the modulation may be wider, for instance up to 4GHz. The FMCW signal resulting from the chirp generator 110 is applied to a Tx modulator module 120. The Tx modulator 120 imposes phase modulation onto the chirps according to a CDMA system (as will be described in more detail hereinbelow). The CDMA codes are unique for each transmitter channel. The signal for each of the K transmitters is amplified through a respective power amplifier (PA) 132, 134, and broadcast from a respective transmit antenna $TX_0$ 142 through $TX_{K-1}$ 144.

On the receive side of the radar system 100, a set of L antennas $Rx_0$ through $Rx_{L-1}$, shown at 152, 154... 156 , are arranged to receive the reflected signals in L receive channels. The receive antennas are each connected to a respective RF front-end (RFE) 162, 164... 166 of a receiver front-end 160. The respective RFE processes the signal in the analogue domain, again as will be described in more detail hereinbelow, and converts the processed signal to groups of digital samples. The groups of digital samples from each RFE are passed to a digital signal processor DSP 170, or equivalent, for further signal processing, again as will be described in more detail hereinbelow. The skilled person will appreciate that the DSP functionality may be carried out within one processor, unit or device or may be distributed across more than one processor, unit or device.

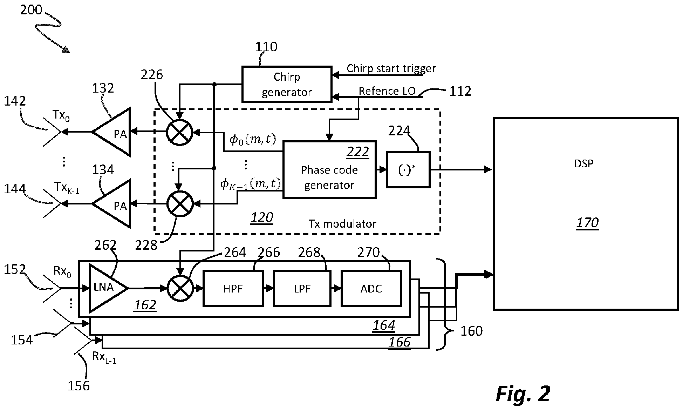

Turning to FIG. 2, this shows a radar system 200, which may correspond to that shown in FIG. 1, at an increased level of detail for the transmitter modulator 120 and the receiver front-end 160. The Tx modulator 120 includes a phase shift generator 222 which receives a signal from the reference LO 112 and applies, at respective mixer 226... 228, an additional respective time-dependent phase shift, $\varphi_0(m,t)... \varphi_{K-1}(m,t)$ to the signal to be amplified by respective power amplifier 132... 134, where m represents the slow-time "chirp index" within a frame of chirps, and t is the "fast-time",. $\varphi_{K-1}(m,t)$ is generally referred to herein as the phase coding, or phase code; thus the phase coding is applied both within a chirp, and across multiple chirps of each radar frame. The phase shift, or phase rotation, may be applied by known processing techniques.

FIG. 2 also shows more detail of one 162 of the RF front-ends of receiver front-end 160. In particular the signal received at receive antenna Rxo 152 is amplified by a low noise amplifier 262 (LNA) before being mixed at mixer 264 with a copy of the unmodulated chirp generated by chirp generator 110. Mixing the amplified receive signal with the unmodulated chirp from the transmitter may be viewed as "down converting", the signal, and this is widely carried in a wireless communication and radar applications to recover the information or signal. However, in the case of FMCW radar applications a result of mixing the amplified receive signal with the (unmodulated) transmitted signal is to isolate a frequency difference (which may also be referred to as a beat frequency) between the transmitted signal and the receive signal: since the transmitted signal is a chirp with, generally, linear frequency modulation (LFM), the beat frequency which corresponds to the difference in frequency between the transmitted signal and the received signal, depends on the total time of flight of the transmitted signal to and from the reflector (or target), which in turn depends on the distance between the radar and the reflector.

The analogue signal is then cleaned, for example by being filtered through a high pass filter (HPF) 266 for direct leakage suppression, followed by a low pass filter (LPF) 268 for anti-aliasing, and to remove any frequency-sum component from the mixed signal, leaving just the frequency-difference, or beat frequency, signal. It is then converted to the digital domain, by means of analogue to digital converter (ADC) 270 which samples the data at predefined acquisition intervals. The ADC must have a sufficient sampling rate to adequately capture the frequency and phase of the received signal. It typically has a sampling rate which is at least 10 times the frequency of the reference oscillator 112. The digital samples of the signal are then passed to the DSP 170 along with the corresponding front-end processed digital signals from the other receive channels from respective antennas 154... 156.

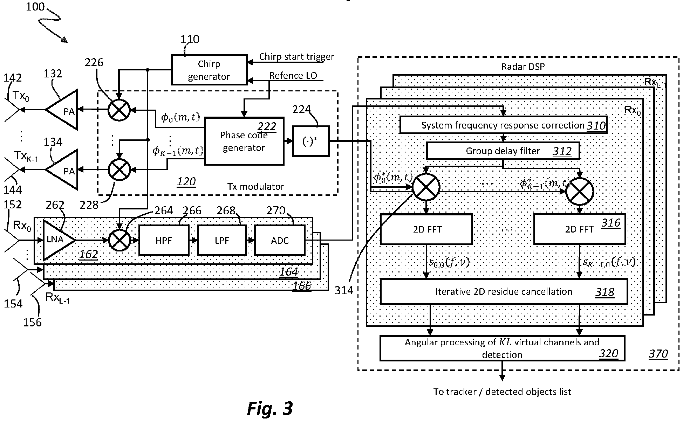

The processing in the DSP 170 may be summarized as follows, with reference to FIG. 3, which shows a radar system 300 which may correspond to those shown in FIG. 1 and FIG. 2, with an increased level of detail for the digital processing part 170.

First, the frequency responses (amplitude and phase) of digitized analog incoming signal are corrected for proper signals decoding, at 310. Then a group delay filter is applied, at 312, for proper alignment of the responses of all targets independently of their range for proper decoding in fast time. The signal is replicated, or copied, K times, to result in K signals, each of which can be processed according to different ones of the transmit channels Tx. Then, at 314, the codes are removed, typically by multiplication with the conjugate of the transmitted code in the corresponding Tx channel and, at 316, a two-dimensional fast Fourier Transform (2D FFT), from time-sample and channel, to range and velocity ("Doppler") is applied. The output is used in the iterative 2D residue cancellation block 318, in which 2D residue cancellation is applied at least once, and may be applied over multiple passes, to improve the dynamic range, or OR, of the CDMA MIMO. The cleaned outputs can then be exported for direction or arrival (DOA) processing, detection and creating the point cloud, as shown at 320.

Thus, the received signals are first pre-processed and digitized in the analog domain in the receiver front-end 160; they are then processing in the digital domain, for instance within the DSP 170.

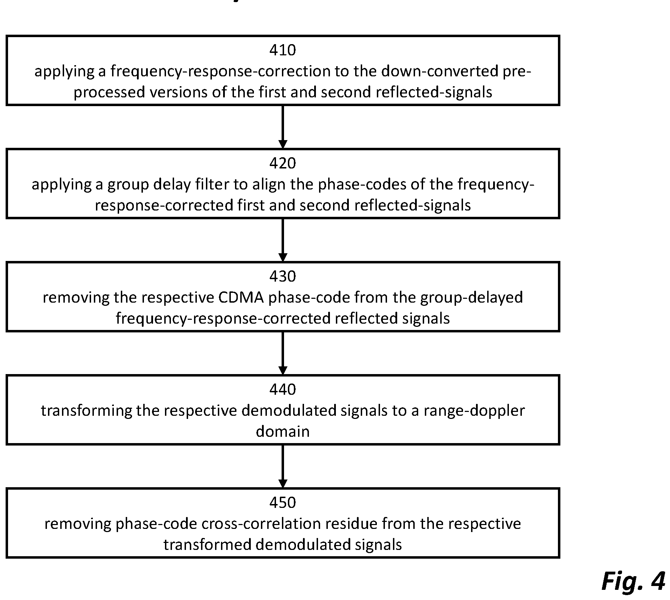

In particular, with reference to FIG 4, and considering the simplest cases in which there are just two Tx elements 142, 144 which each transmit PM-FMCW signal which is reflected from a target to provide a first and a second reflected-signal to a single receiver having a front end 162, which converts and pre-processes the reflected signals as described above, the down-converted pre-processed versions of the first reflected-signal and the second reflected-signal are processed in the digital domain, by applying a frequency-response-correction to the down-converted pre-processed versions of the first and second reflected-signal to provide corrected groups of samples, at step 410; applying a group delay filter to align the phase-codes of the corrected groups of samples, to provide time-aligned groups of samples, at step 420; removing the respective CDMA phase-code from time-aligned groups of samples, to provide respective demodulated signals, at step 430; transforming the respective demodulated signals to a -range-doppler domain (where range corresponds to a "fast-frequency", and doppler corresponds to a "slow-frequency") by applying a 2-dimensional fast Fourier transform, 2D-FFT, at step 440; and removing phase-code cross-correlation residue from the respective transformed demodulated signals by calculating an estimated residue and subtracting the estimated residue from the respective transformed demodulated signal, at step 450.

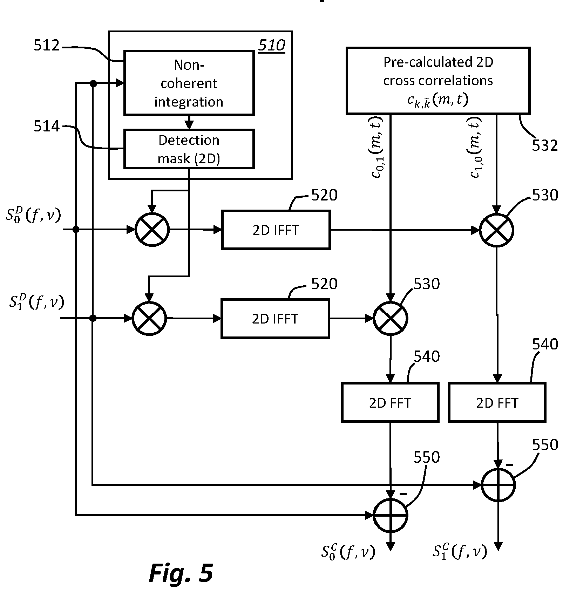

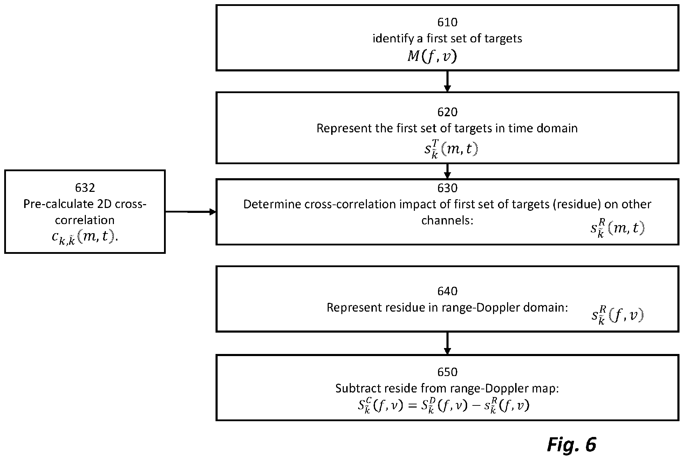

Consider now FIG. 5 and FIG. 6; FIG. 5 show a block diagram of a process to remove phase-code cross-correlation residue from the respective transformed demodulated signals, in the simplest case of the received signals comprising reflections from only two Tx elements; FIG. 6 shows a corresponding flow diagram for the case of three or more Tx elements. The cross-correlation residue results from imperfect orthogonality of the phase-codes: since they are not infinitely long, the phase-codes are not perfectly orthogonal, and thus a signal in first channel partially leaks into the other channels, resulting in a "residue" of the first channel signal, in the other channels.

In summary, a first set of targets is identified and isolated, and it is assumed that those targets provide reflection components to the signal from each of the transmitted signals. The individual targets in the first set of targets may also be referred to as high-probability target points, or strong spectral peaks. For each channel, the impact of the cross correlation of those targets on each of the remainder of the channels can be determined - or at least estimated - and that "residue" removed from the signal. The original signal, or more accurately, the original group of samples (since the processing is in the digital domain), are replaced by those with the residues removed, resulting in "cleaner" groups of samples. Since the resulting groups of samples include lower contamination (the residues from the already identified targets having been removed), additional targets may now be revealed, should the same detection mask be re-applied as was used to identify the first set of targets. The process can be applied iteratively, by estimating the additional cross-correlation residue resulting from those additional targets, and removing that additional cross-correlation residue, and so on.

At step 610, and as shown at 510 on the block diagram, the first set of targets is identified. This may be done, for example, by non-coherent integration, shown as 512, followed by applying a detector, at 514. This may be done by known techniques, for instance, by using a constant false alarm rate (CFAR) detector. The resulting detection mask includes a first set of targets. The first set of targets are represented in the time domain, as $s_{\tilde{k}}^{T}(m, t)$, at shown at 620, by applying a 2D-FFT, at 520, to each groups of samples corresponding to the identified targets. The residue $s_{\tilde{2}}^{R}(m, t)$, in the second channel (which results from the imperfect orthogonality of the channel phase-codes), from the signal in first channel of identified targets, is then determined, at 530, and 630, as is the corresponding residue in the first channel $s_{\tilde{1}}^{R}(m, t)$. The cross-correlations coefficients $c_{1,\tilde{2}}(m, t)$ and $c_{2,\tilde{1}}(m, t)$ between the two channels may be pre- calculated, as shown at 532 and 632. It will be appreciated that $c_{1,\tilde{2}}(m, t)$ and $c_{2,\tilde{1}}(m, t)$ are the conjugate transpose of each other, and the cross-correlation coefficients are equivalent.. A further 2D FFT is applied to transform the residues $s_{\tilde{1}}^{R}(m, t)$ and $s_{2}^{R}(m, t)$ into the frequency-Doppler (i.e. range-velocity) domain as $s_{\tilde{k}}^{R}(f, v)$ and $s_{\tilde{k}}^{R}(f, v)$, as shown as 540 and 640. The residue can then be subtracted from the original groups of samples, to eliminate the residue associated with the identified targets, from the data.

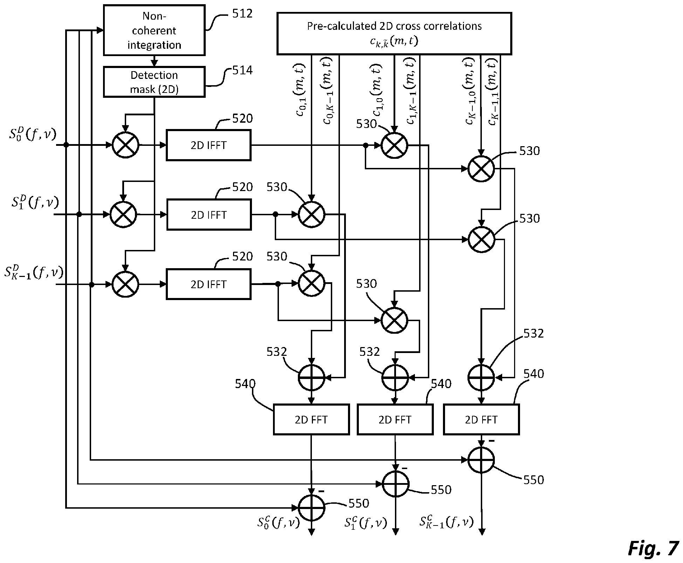

The skilled person will appreciate that the example shown in FIG. 5 with only two transmitters represents the simplest case. FIG. 7 shows a more representative case in the example of K transmitters. Comparing figure 7 with figure 5, the primary difference is that for each transmitter, there is a residue element from more than one other channel. In order to cancel the residue elements from each of the other channels, these have to be combined, which is done in the time domain, as shown as 532 for each channel. Again, the skilled person will appreciate that since there are shown channels, there are two cross-correlation residue elements to be combined in each mixer 532; in the general case with K channels, K -1 cross-correlation elements residue elements would be mixed in each of the mixers 532. It will be recalled that K is at least 2, and typically K is 8 or 16.

For a fuller understanding of the present disclosure, the method described above will now be considered in more detail, with a fuller mathematical basis: the MIMO radar 300 has K simultaneously active channels that emit a burst of M linearly frequency modulated chirps:

$$s_k^{\text{Tx}}(m,\ t) = e^{j2\pi\left(f_c t - \frac{\beta}{2}t^2\right)}\phi_k(m, t) \tag{2}$$

where $f_c$ denotes the carrier frequency, $\beta$ is the chirp slope, m is the chirp (slow-time) index and $t$ is the fast time, and $k = 0,..., K - 1$ is the transmitter index. The phase coding $\phi_k(m, t)$ is applied on top of the chirps and can be seen as two-dimensional array per Tx that shows fast-time modulation applied per each sequential chirp index m over fast-time.

The observed scene can be represented by a linear combination of multiple point-like targets embedded in system noise (for notational simplicity derivations per single Rx channel are listed, the equations below may be generalized for multiple Rx channels):

$$s^{\text{Rx}}(m,\ t, k) = \sum_{k=0}^{K-1} \alpha_i s_k^{\text{Tx}}\left(m,\ t - \tau_i(m,t)\right)e^{j2\pi f_{A,i}k} + n(m, t) \tag{3}$$

The received signal is mixed with an unmodulated replica of the chirp to obtain the beat signal, which can be described by the following expression (in which a narrowband approximation is applied):

$$s^{\text{b}}(m,\ t) = s^{\text{Rx}}(m,\ t)e^{-j2\pi\left(f_c t + \frac{\beta}{2}t^2\right)} + n(m, t) \approx$$

$$\sum_{i=1}^{I} \alpha_i e^{j2\pi\beta\tau_i t}e^{j2\pi f_{D, i}mT} \sum_{k=0}^{K-1} \phi_k(m, t - \tau_i)e^{j2\pi f_{A,i}k} + n(m, t) \tag{4}$$

Herein the range Ri of each target is embedded in its time delay:

$$\tau_i = 2R_i/c; \qquad\qquad (5)$$

the velocity $v_i$ results in the respective Doppler frequency

$$f_{D,i} = \frac{2v_i f_c}{c}; \qquad\qquad (6)$$

and the angle is represented by the spatial frequency $f_A = \frac{d\sin(\theta_i)}{\lambda}$ (for simplicity Tx is represented as a uniform linear array - ULA).

Finally, $n(m, t)$ defines the thermal noise of the system.

The first step of the signal processing consists of aligning the codes using the group delay filter and for the data acquired in the predefined acquisition interval. Assuming that the modulation signal is sufficiently narrowband (typically modulation bandwidth $B_\phi$ is below 10% of the ADC sampling frequency, $B_\phi \leq 0.1 f_s$) and its spectrum decay rapidly outside of its band, then the group delay filter should align the signals such that the contribution of the time delay is diminished:

$$s^{GD}(m, t) \approx \sum_{i=1}^{I} \alpha_i e^{j2\pi\beta\tau_i t} e^{j2\pi f_{D,i}mT} \sum_{k=0}^{K-1} \phi_k(m,t) e^{j2\pi f_{A,i}k} + \tilde{n}(m,t) \quad (7)$$

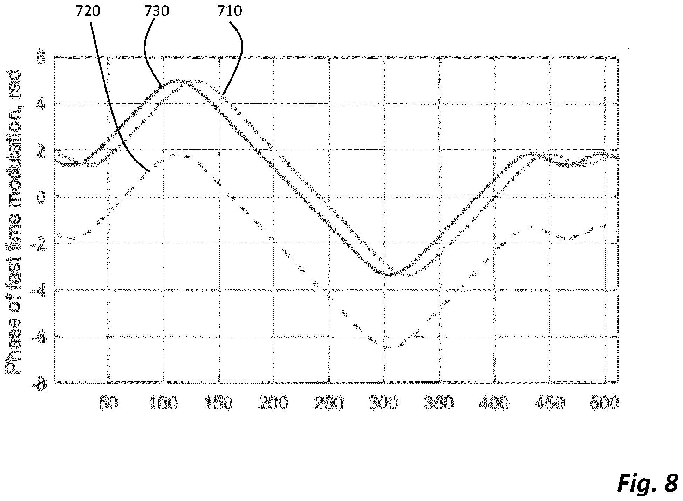

Note that the group delay filter can be implemented by various different processes, e.g. via FFTs and phase correction in the frequency domain or via a digital filter. FIG. 8 shows an example of the fast time phase history before (at 810) and after (at 820) applying the group delay filter, compared with the transmitted signal (830). Note that the Rx signal is not aligned with Tx signal before applying the group delay filter. This would result in incorrect decoding and low dynamic range in case no group delay filter is applied. In the example shown in FIG. 8, the phase coding $\phi_k(m, t)$ is a GMSK modulation over fast time with 32 chips per chirp.

The signal is then copied the number of times as the number of Txs which are used in CDMA mode and the virtual Txs are denoted by $\tilde{k}$:

$$s_{\tilde{k}}^{D}(m, t) = s^{GD}(m, t)\big(\phi_{\tilde{k}}(m,t)\big)^{*} \qquad\qquad (8).$$

The $\tilde{k}$-th virtual channel then has signals with the targets responses corresponding to this virtual Tx channel (first sum in the equation below) and the cross-correlation terms coming from the other Tx channels (second sum in the equation below):

$$s_{\tilde{k}}^{D}(m, t) = \sum_{i=1}^{I} \alpha_i e^{j2\pi\beta\tau_i t} e^{j2\pi f_{D,i}mT} e^{j2\pi f_{A,i}\tilde{k}}$$

$$+ \sum_{i=1}^{I} \alpha_i e^{j2\pi\beta\tau_i t} e^{j2\pi f_{D,i}mT} \sum_{k=0, k\neq\tilde{k}}^{K-1} e^{j2\pi f_{A,i}k} \big(\phi_k(m,t)\phi_{\tilde{k}}^{*}(m,t)\big)$$

$$= \sum_{i=1}^{I} \alpha_i e^{j2\pi\beta\tau_i t} e^{j2\pi f_{D,i}mT} \Big(e^{j2\pi f_{A,i}\tilde{k}} + \sum_{k=0, k\neq\tilde{k}}^{K-1} e^{j2\pi f_{A,i}k} c_{k,\tilde{k}}(m, t)\Big) \quad (9),$$

In this expression

$$c_{k,\tilde{k}}(m, t) = \phi_k(m,t)\phi_{\tilde{k}}^{*}(m,t) \qquad\qquad (10)$$

is the 2D cross-correlation between codes $k$ and $\tilde{k}$. Note that during the presence of cross-correlation terms of the strong signals, the weak targets in the vicinity of a strong target can be hidden by the cross-correlation response of the latter.

Applying 2D FFT to the acquired data provides the range-Doppler representation of the scene:

$$S_{\tilde{k}}^D(f, v) = \sum_{i=1}^I \alpha_i e^{j2\pi f_{A,i}\tilde{k}} \delta(v - \beta\tau_i)\delta(f - f_{D,i})$$

$$+ \sum_{i=1}^I \alpha_i \sum_{k=0, k\neq\tilde{k}}^{K-1} e^{j2\pi f_{A,i}k} C_{k,\tilde{k}}(f - f_{D,i}, v - \beta\tau_i) \quad (11)$$

In this expression, $v$ denotes the fast-time frequency (range) and $f$ denotes the Doppler frequency, which is proportional to target radial velocity; moreover, $C_{k,\tilde{k}}(f,v)$ is the 2D FFT of the cross-correlation function $c_{k,\tilde{k}}(m, t)$.

The proposed 2D residue estimation algorithm, according to the present disclosure, has steps as already outlined hereinabove with respect to FIG. 5 and FIG. 6. There will now be restated, with appropriate mathematical derivations, First, at 610, a detector, such as constant false alarm rate (CFAR), is applied to the combination of the channels (e.g. via non-coherent sum). A detection mask in range and Doppler $M(f, v)$ is then obtained:

$$M(f, v) = \begin{cases} 1, & \sum_k |S_{\tilde{k}}^D(f, v)|^2 > \gamma \\ 0 & else \end{cases} \quad (12)$$

Next, at 620, the time domain representation of the of detected targets per each Tx channel is then obtained by applying 2D IFFT to the product of the current range-Doppler map and detection mask:

$$s_{\tilde{k}}^T(m, t) = \sum_f \sum_v S_{\tilde{k}}^D(f, v) M(f, v) e^{j2vt} e^{j2\pi fmT}. \quad (13)$$

Next, at 630, for each Tx channel the impact of cross correlation from other active CDMA coded Tx channels is evaluated in time domain: although the simplest, case, in which there are only two Tx elements (and hence two virtual channels such that $\tilde{k} = 2$ ), this can be generalized for any suitable value of $\tilde{k}$:

$$s_{\tilde{k}}^R(m, t) = \sum_{k=0, k\neq\tilde{k}}^{K-1} s_{\tilde{k}}^T(m, t) c_{k,\tilde{k}}(m, t). \quad (14)$$

At 640 it is transformed to the frequency domain by applying 2D FFT and at 650 subtracted from the original range-Doppler map:

$$S_{\tilde{k}}^C(f, v) = S_{\tilde{k}}^D(f, v) - \sum_m \sum_t s_{\tilde{k}}^R(m, t) e^{-j2vt} e^{-j2\pi fmT}. \quad (15)$$

This range-Doppler map can either be used as an output of the residue cancellation technique, or it can be used as an input for the next iteration, in the instance that multiple iterations are applied.

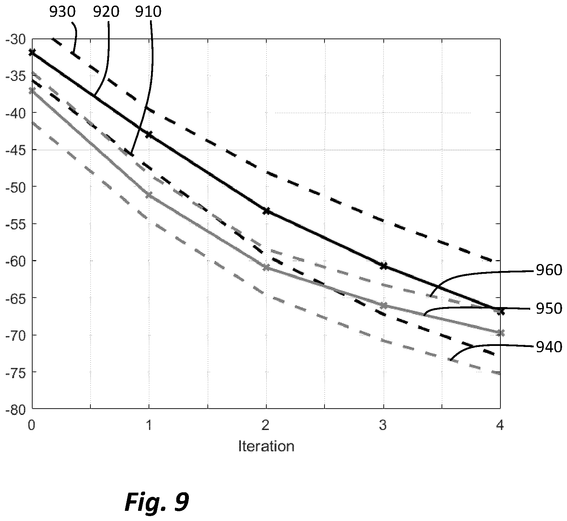

Turning now to FIG. 9, this shows some statistical analysis of the achievable dynamic range according to embodiments disclosed herein. For the statistical simulations, a frame-length of 128 chirps was used, and the signal sample rate was N=512 (i.e. each ADC provides 512 samples per chirp, which corresponds to an 12.8 $\mu$s acquisition time at Fs = 40MHz). A noise-free scenario is considered with 32 targets, with a MIMO radar have 4 transmitters, and 4 receivers, end 100 trials. The skilled person will appreciate that in the noise-free case demonstrates the dynamic range limit due to CDMA cross-correlation, and that this is independent of the targets' crosssections or magnitudes. At 910, 920 and 930 are shown minimum, mean and maximum side-lobe levels (SLL) - as used herein, SSL corresponds to the cross-correlation residuals - , in the conventional "ST-CDMA" case in which CDMA is applied only in the slow-time (that is, the coding is applied across the chips with a frame, but not within an individual chirp such that each bit is the length of one chirp). At 940, 950 and 960, are shown minimum, mean and maximum SLL, according to embodiments of the present disclosure using such that the CDMA code is applied across both fast and slow-time - that is to say, code bits correspond to individual chips with each chirp, and the code extends over multiple chirps. Note that due to the longer code used in PM-FMCW it provides 6-10 dB gain with respect to ST-CDMA in the initialization and first iterations and the difference diminished with more iterations. It seems that in practise for small to moderate sparsity of the scene each iteration provides 5-10 dB gain in dynamic range that can be used to predict the required number of iterations.

From reading the present disclosure, other variations and modifications will be apparent to the skilled person. Such variations and modifications may involve equivalent and other features which are already known in the art of MIMO CDMA radar systems and processes, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims [delete if not relevant] and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

**Claims**

1. A method of operating a multi-input multi-output, MIMO, radar system for automotive applications, the method comprising,

    transmitting a first frequency-modulated continuous wave, FMCW, signal from a first transmitter;
    transmitting a second FMCW signal from a second transmitter;
    wherein the first signal and the second signal each comprise a plurality of chirps, and each signal comprises phase modulation of the FMCW signal within each chirp by a respective Code Division Multiple Access, CDMA, phase-code to produce a respective first and second PM-FMCW signal;
    receiving, at a receiver, a composite signal comprising at least one reflection of each of the first PM-FMCW signal and the second PM-FMCW signal; and
    processing, in the digital domain, a plurality of down-converted and pre-processed groups of samples of the composite signal, by:

        applying a frequency-response-correction to the down-converted and pre-processed groups of samples, to provide corrected groups of samples;
        applying a group delay filter to align the CDMA phase-codes of the corrected groups of samples, to provide time-aligned groups of samples;
        removing the respective CDMA phase-code from the time-aligned groups of samples to provide respective demodulated groups of samples;
        transforming the respective demodulated groups of samples to a range-doppler domain by applying a 2-dimensional fast Fourier transform, 2D-FFT; and
        removing phase-code cross-correlation residue from the respective transformed demodulated groups of samples by calculating an estimated residue and subtracting the estimated residue from the respective transformed demodulated signal.

2. The method of claim 1, wherein
    removing the respective CDMA phase-code comprises multiplying the group-corrected frequency-response-corrected group of samples with a conjugate of the PM-FMCW signal.

3. The method of claim 1 or 2, wherein
    the first and second signals each comprise repeating frames of a plurality of chirps, and each chirp within a frame has a different CDMA phase-code.

4. The method of claim 1 or 2, wherein
    the first and second signals each comprise repeating frames of a plurality of chirps, and each chirp within a frame has the same CDMA phase-code.

**5.** The method of any preceding claim, wherein
Each chirp comprises a plurality of chips, and has a phase-code comprising a combination of a respective phase of each of the chips.

**6.** The method of any preceding claim, wherein
the frequency modulation is linear modulation.

**7.** The method of claim 1 or 2, wherein removing a phase-code cross-correlation residue from each respective transformed demodulated signal comprises a residue-cancellation iteration comprising:

applying a detection mask to the respective transformed demodulated signal, thereby isolating high-probability target points;
applying a 2D inverse FFT, 2D-IFFT, resulting in an isolated-target signal;
estimating a respective estimated cross-correlation component in each other transformed demodulated signal, from the isolated-target signal, and combining these to produce an estimated residue signal; and
applying a 2D FFT, to the estimated-residue signal, to produce a transformed estimated-residue signal; and subtracting the transformed estimated-residue from the respective transformed demodulated signal.

**8.** The method of claim 7, wherein estimating a respective estimated cross-correlation component in each of the other transformed demodulated signals, from the transformed reduced-target signal comprises:
multiplying the other transformed demodulated signal by a precalculated cross-correlation coefficient between the other signal and the signal.

**9.** The method of claim 6 or 7, further comprising a further residue-cancellation iteration.

**10.** A CDMA automotive MIMO radar system comprising:

a plurality of transmitters, each configured to transmits a radar frames comprising a plurality of chirps having frequency-modulation therein, wherein the frames from each transmitter include Code Division Multiple Access, CDMA, encoding according to which each of the plurality of chirps includes phase-modulation therewithin;
a plurality of receivers;
a respective RF-front end processor for each of the plurality of receivers, configured to provide groups of digital samples of the down-converted, and pre-processed, to a digital signal processor; and
a digital signal processor configured to

apply a frequency-response-correction to the down-converted and pre-processed groups of samples, to provide corrected groups of samples;
apply a group delay filter to align the CDMA phase-codes of the corrected groups of samples, to provide time-aligned groups of sample;
remove the respective CDMA phase-code from the time-aligned groups of samples to provide respective demodulated groups of samples;
transform the respective demodulated groups of samples to a range-doppler domain by applying a 2-dimensional fast Fourier transform, 2D-FFT; and
remove phase-code cross-correlation residue from the respective transformed demodulated groups of samples by calculating an estimated residue and subtracting the estimated residue from the respective transformed demodulated signal.

**11.** The CDMA automotive MIMO radar of claim 10, wherein:
removing the respective CDMA phase-code comprises multiplying the group-corrected frequency-response-corrected group of samples with a conjugate of the PM-FMCW signal.

**12.** The CDMA automotive MIMO radar of claim 10 or 11, wherein:
the first and second signals each comprise repeating frames of a plurality of chirps, and each chirp within a frame has a different CDMA phase-code.

**13.** The CDMA automotive MIMO radar of any of claims 10 to 12, wherein:

each chirp comprises a plurality of chips, and has a phase-code comprising a combination of the respective phase of each of the chips.

14. The CDMA automotive MIMO radar of any of claims 10 to 13, wherein the processor is configured to remove a phase-code cross-correlation residue from each respective transformed demodulated signal comprises a residue-cancellation iteration by:

applying a detection mask to the respective transformed demodulated signal, thereby isolating high-probability target points;
applying a 2D inverse FFT, 2D-IFFT, resulting in an isolated-target signal;
estimating a respective estimated cross-correlation component with each other transformed demodulated signal, from the isolated-target signal, and combining these to produce an estimated-residue signal; and
applying a 2D FFT, to the estimated-residue signal., to produce a transformed estimated-residue signal; and subtracting the transformed estimated-residue from the respective transformed demodulated signal.

15. The CDMA automotive MIMO radar of any of claims 10 to 14, wherein the processor is configured a plurality of residue-cancellation iterations.

**Amended claims in accordance with Rule 137(2) EPC.**

1. A method of operating a multi-input multi-output, MIMO, radar system (100) for automotive applications, the method comprising,

transmitting a first frequency-modulated continuous wave, FMCW, signal from a first transmitter;
transmitting a second FMCW signal from a second transmitter; wherein the first signal and the second signal each comprise a plurality of chirps, and each signal comprises phase modulation of the FMCW signal within each chirp by a respective Code Division Multiple Access, CDMA, phase-code to produce a respective first and second PM-FMCW signal;
receiving, at a receiver, a composite signal comprising at least one reflection of each of the first PM-FMCW signal and the second PM-FMCW signal; and
processing, in the digital domain, a plurality of down-converted and pre-processed groups of samples of the composite signal, by:

applying (410) a frequency-response-correction to the down-converted and pre-processed groups of samples, to provide corrected groups of samples;
applying (420) a group delay filter to align the CDMA phase-codes of the corrected groups of samples, to provide time-aligned groups of samples;
removing (430) the respective CDMA phase-code from the time-aligned groups of samples to provide respective demodulated groups of samples;
transforming (440) the respective demodulated groups of samples to a range-doppler domain by applying a 2-dimensional fast Fourier transform, 2D-FFT;
**characterized in that** the processing in the digital domain further comprises:
removing (450) phase-code cross-correlation residue from the respective transformed demodulated groups of samples by calculating an estimated residue and subtracting the estimated residue from the respective transformed demodulated signal.

2. The method of claim 1, wherein
removing the respective CDMA phase-code comprises multiplying the group-corrected frequency-response-corrected group of samples with a conjugate of the PM-FMCW signal.

3. The method of claim 1 or 2, wherein
the first and second signals each comprise repeating frames of a plurality of chirps, and each chirp within a frame has a different CDMA phase-code.

4. The method of claim 1 or 2, wherein
the first and second signals each comprise repeating frames of a plurality of chirps, and each chirp within a frame has the same CDMA phase-code.

**5.** The method of any preceding claim, wherein
each chirp comprises a plurality of chips, and has a phase-code comprising a combination of a respective phase of each of the chips.

**6.** The method of any preceding claim, wherein
the frequency modulation is linear modulation.

**7.** The method of claim 1 or 2, wherein removing a phase-code cross-correlation residue from each respective transformed demodulated signal comprises a residue-cancellation iteration comprising:

applying (610) a detection mask to the respective transformed demodulated signal, thereby isolating high-probability target points;
applying (620) a 2D inverse FFT, 2D-IFFT, resulting in an isolated-target signal;
estimating (630) a respective estimated cross-correlation component in each other transformed demodulated signal, from the isolated-target signal, and combining these to produce an estimated residue signal; and
applying (640) a 2D FFT, to the estimated-residue signal, to produce a transformed estimated-residue signal; and
subtracting (650) the transformed estimated-residue from the respective transformed demodulated signal.

**8.** The method of claim 7, wherein estimating a respective estimated cross-correlation component in each of the other transformed demodulated signals, from the transformed reduced-target signal comprises:
multiplying the other transformed demodulated signal by a precalculated cross-correlation coefficient between the other signal and the signal.

**9.** The method of claim 6 or 7, further comprising a further residue-cancellation iteration.

**10.** A CDMA automotive MIMO radar system comprising:

a plurality of transmitters (142..144), each configured to transmit a radar frames comprising a plurality of chirps having frequency-modulation therein, wherein the frames from each transmitter include Code Division Multiple Access, CDMA, encoding according to which each of the plurality of chirps includes phase-modulation therewithin;
a plurality of receivers;
a respective RF-front end processor (162, 164... 166) for each of the plurality of receivers, configured to provide groups of digital samples of the down-converted, and pre-processed, to a digital signal processor; and
a digital signal processor (370) configured to

apply (410) a frequency-response-correction to the down-converted and pre-processed groups of samples, to provide corrected groups of samples;
apply (420) a group delay filter to align the CDMA phase-codes of the corrected groups of samples, to provide time-aligned groups of sample;
remove (430) the respective CDMA phase-code from the time-aligned groups of samples to provide respective demodulated groups of samples;
transform (440) the respective demodulated groups of samples to a range-doppler domain by applying a 2-dimensional fast Fourier transform, 2D-FFT;
**characterised in that** the digital signal processor is further configured to:
remove (450) phase-code cross-correlation residue from the respective transformed demodulated groups of samples by calculating an estimated residue and subtracting the estimated residue from the respective transformed demodulated signal.

**11.** The CDMA automotive MIMO radar of claim 10, wherein:
removing the respective CDMA phase-code comprises multiplying the group-corrected frequency-response-corrected group of samples with a conjugate of the PM-FMCW signal.

**12.** The CDMA automotive MIMO radar of claim 10 or 11, wherein:
the first and second signals each comprise repeating frames of a plurality of chirps, and each chirp within a frame has a different CDMA phase-code.

**13.** The CDMA automotive MIMO radar of any of claims 10 to 12, wherein:

each chirp comprises a plurality of chips, and has a phase-code comprising a combination of the respective phase of each of the chips.

14. The CDMA automotive MIMO radar of any of claims 10 to 13, wherein the processor is configured to remove a phase-code cross-correlation residue from each respective transformed demodulated signal comprises a residue-cancellation iteration by:

applying (610) a detection mask to the respective transformed demodulated signal, thereby isolating high-probability target points;
applying (620) a 2D inverse FFT, 2D-IFFT, resulting in an isolated-target signal;
estimating (630) a respective estimated cross-correlation component with each other transformed demodulated signal, from the isolated-target signal, and combining these to produce an estimated-residue signal; and
applying (640) a 2D FFT, to the estimated-residue signal., to produce a transformed estimated-residue signal; and
subtracting (650) the transformed estimated-residue from the respective transformed demodulated signal.

15. The CDMA automotive MIMO radar of any of claims 10 to 14, wherein the processor is configured a plurality of residue-cancellation iterations.

Fig. 1

Fig. 2

**Fig. 3**

-

```
┌─────────────────────────────────────────────────────────────────┐
│                               410                                 │
│   applying a frequency-response-correction to the down-converted  │
│   pre-processed versions of the first and second reflected-signals│
└─────────────────────────────────────────────────────────────────┘
                                  │
                                  ▼
┌─────────────────────────────────────────────────────────────────┐
│                               420                                 │
│   applying a group delay filter to align the phase-codes of the   │
│   frequency-response-corrected first and second reflected-signals │
└─────────────────────────────────────────────────────────────────┘
                                  │
                                  ▼
┌─────────────────────────────────────────────────────────────────┐
│                               430                                 │
│   removing the respective CDMA phase-code from the group-delayed  │
│      frequency-response-corrected reflected signals               │
└─────────────────────────────────────────────────────────────────┘
                                  │
                                  ▼
┌─────────────────────────────────────────────────────────────────┐
│                               440                                 │
│   transforming the respective demodulated signals to a range-     │
│                       doppler domain                              │
└─────────────────────────────────────────────────────────────────┘
                                  │
                                  ▼
┌─────────────────────────────────────────────────────────────────┐
│                               450                                 │
│   removing phase-code cross-correlation residue from the          │
│         respective transformed demodulated signals                │
└─────────────────────────────────────────────────────────────────┘
```

*Fig. 4*

**Fig. 5**

<div style="text-align:center">

**610**
identify a first set of targets
$M(f, v)$

↓

**620**
Represent the first set of targets in time domain
$s_{\tilde{k}}^{T}(m, t)$

</div>

**632**
Pre-calculate 2D cross-correlation
$c_{k,\tilde{k}}(m, t)$.

→

**630**
Determine cross-correlation impact of first set of targets (residue) on other channels:
$s_{\tilde{k}}^{R}(m, t)$

**640**
Represent residue in range-Doppler domain: $s_{\tilde{k}}^{R}(f, v)$

↓

**650**
Subtract reside from range-Doppler map:
$S_{\tilde{k}}^{C}(f, v) = S_{\tilde{k}}^{D}(f, v) - s_{\tilde{k}}^{R}(f, v)$

<div style="text-align:right">

***Fig. 6***

</div>

*Fig. 7*

**Fig. 8**

*Fig. 9*

Europäisches
Patentamt
European
Patent Office
Office européen
des brevets

# EUROPEAN SEARCH REPORT

**Application Number**

EP 24 18 9428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/305103 A1 (NAM SANG HO [KR] ET AL) 28 September 2023 (2023-09-28) * paragraphs [0002], [0003], [0036], [0051], [0052], [0054], [0064], [0072] - [0075]; figures 1,5b,7a * | 1-15 | INV. G01S13/32 G01S13/34 G01S13/58 G01S13/931 |
| A | WO 2020/162751 A1 (UNIV DELFT TECH [NL]) 13 August 2020 (2020-08-13) * page 10, lines 11-14, page 13, lines 2-14, page 16, lines 17-23; figure 3 * | 1-15 | |
| A | US 2023/296749 A1 (MANICA LUCA [IT] ET AL) 21 September 2023 (2023-09-21) * the whole document * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 13 January 2025 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9428

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2025

| Patent document cited in search report | | Publication date | Patent family member(s) | | Publication date |
|---|---|---|---|---|---|
| US 2023305103 | A1 | 28-09-2023 | CN | 116804737 A | 26-09-2023 |
| | | | DE | 102022106791 A1 | 28-09-2023 |
| | | | JP | 3241975 U | 18-05-2023 |
| | | | KR | 20230140385 A | 06-10-2023 |
| | | | US | 2023305103 A1 | 28-09-2023 |
| WO 2020162751 | A1 | 13-08-2020 | NONE | | |
| US 2023296749 | A1 | 21-09-2023 | CN | 116593968 A | 15-08-2023 |
| | | | EP | 4227710 A1 | 16-08-2023 |
| | | | US | 2023296749 A1 | 21-09-2023 |

For more details about this annex : see Official Journal of the European Patent Office, No. 12/82